(19)

Europäisches
Patentamt
European
Patent Office
Office européen
des brevets

(11)  **EP 4 376 028 B1**

(12)  **EUROPEAN PATENT SPECIFICATION**

(45) Date of publication and mention
of the grant of the patent:
**25.02.2026  Bulletin 2026/09**

(21) Application number: **22845269.4**

(22) Date of filing: **18.07.2022**

(51) International Patent Classification (IPC):
**H01B 7/42** *(2006.01)*

(52) Cooperative Patent Classification (CPC):
**H01B 7/421; B60L 53/18; B60L 53/302;**
**B60L 58/21;** B60L 2240/545; B60L 2270/142;
B60L 2270/145; H01B 3/28; H01B 3/302;
H01B 3/305; H01B 3/441; H01B 3/443; Y02T 10/70;
Y02T 10/7072; Y02T 90/14

(86) International application number:
**PCT/CN2022/106259**

(87) International publication number:
**WO 2023/001104 (26.01.2023 Gazette 2023/04)**

(54)  **CABLE HAVING COOLING FUNCTION, CURRENT TRANSMISSION DEVICE, AND ELECTRIC VEHICLE**

KABEL MIT KÜHLFUNKTION, STROMÜBERTRAGUNGSVORRICHTUNG UND ELEKTROFAHRZEUG

CÂBLE AYANT UNE FONCTION DE REFROIDISSEMENT, DISPOSITIF DE TRANSMISSION DE COURANT ET VÉHICULE ÉLECTRIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **20.07.2021  CN 202110821578**
**20.07.2021  CN 202121653535 U**

(43) Date of publication of application:
**29.05.2024  Bulletin 2024/22**

(73) Proprietor: **Changchun Jetty Automotive**
**Technology Co., Ltd.**
**Changchun City, Jilin Province 130000 (CN)**

(72) Inventor: **WANG, Chao**
**Changchun, Jilin 130000 (CN)**

(74) Representative: **Boult Wade Tennant LLP**
**Salisbury Square House**
**8 Salisbury Square**
**London EC4Y 8AP (GB)**

(56) References cited:
| | |
|---|---|
| **CN-A- 111 293 510** | **CN-A- 111 426 891** |
| **CN-A- 111 426 891** | **CN-A- 113 488 282** |
| **CN-U- 207 474 759** | **CN-U- 207 474 759** |
| **CN-U- 207 652 897** | **CN-U- 207 652 897** |
| **CN-U- 208 781 982** | **CN-U- 212 579 636** |
| **CN-U- 212 579 636** | **CN-U- 215 911 237** |
| **DE-A1- 102018 120 932** | **JP-A- 2003 032 865** |
| **JP-A- 2006 287 112** | **US-A- 5 079 618** |
| **US-A1- 2018 191 513** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

RELATED APPLICATION

The present disclosure claims priority of the Chinese patent with an application number of 202110821578.3, an invention title of 'cable having cooling function, current transmission device, and electric vehicle' and filed on July 20, 2021. The present disclosure further claims priority of the Chinese patent with an application number of 202121653535.0, an invention title of 'cable with cooling function, current transmission device, and electric vehicle' and filed on July 20, 2021.

TECHNICAL FIELD

The present disclosure relates to the field of current transmission, and particularly to a cable with cooling function, a current transmission device and an electric vehicle.

BACKGROUND

Under the influences of the energy crisis and the increasingly severe weather warming in the world, the new energy vehicle industry, such as the electric vehicle industry, has been a vigorously developing industry. But currently, the charging duration of electric vehicles is long, which has become a bottleneck restricting the widespread use of the electric vehicles. At present, the current for fast charging of the electric vehicles reaches 150 A to 400 A, which leads to the high heat generated in charging cables, which is also a main reason that limits the charging current of the electric vehicles.
In order to solve this problem, firstly, it is urgent to increase the cross-sectional area of the cable and reduce the heat generated in the cable, but the cost of the cable will increase greatly. Secondly, a cooling technology may be adopted to cool the cable.
At present, the technologies of liquid cooling and air cooling are mostly adopted to cool the high-current charging cables. Although the technology of liquid cooling achieves a good cooling effect, it requires additional cooling pipelines, pumps, heat dissipation devices, etc., and has the problems of complex system structure, extremely high requirements for safety and stability, and the increase of the cost. Limited by the mounting size and space, the technology of air cooling has the problems of low cooling efficiency and additional noises which affects the whole vehicle's NVH (Noise, Vibration and Harshness) performance. A household anti-theft charging gun for electric vehicles is known from the prior art, for example from CN207474759U. A semiconductor refrigeration type electric automobile direct-current charging plug is known from the prior art, for example from CN212579636U. A cooling and heating device for electronic equipment testing and control method thereof are known from the prior art, for example from CN111426891A. A cooling device for charging equipment based on the Peltier effect is known from the prior art, for example from CN207652897U or JP2003032865A. A charging connection device for vehicle is known from the prior art, for example from CN111293510A. A cable section is known from the prior art, for example from DE102018120932A1. An active cooling arrangement for power over ethernet arrangements is known from the prior art, for example from US2011/171855A1.
Therefore, in the field of current transmission, there is an urgent need for a cable with cooling function, which can quickly cool the cable, increase the charging current and reduce the cross-sectional area of the cable.

SUMMARY

The present invention is defined by independent claim 1. Further embodiments are set forth in the dependent claims. Any references to inventions or embodiments not falling within the scope of the independent claims are to be interpreted as examples useful for understanding the invention. The present disclosure is intended to solve the problems of complex structure and high cost for conductor cooling using a technology of liquid cooling, anPd the problems of low cooling efficiency and high noises for conductor cooling using a technology of air cooling, in the prior art.
In order to solve the above technical problems, the present invention provides a cable with cooling function, including a semiconductor cooling module 101, a conductor 102 and a control module 103;

a cooling end of the semiconductor cooling module 101 is disposed on at least one side of the conductor 102 to absorb heat dissipated from the conductor 102;
the semiconductor cooling module 101 is electrically connected to the control module 103, and the control module 103 is configured to control an electrical signal supplied to the semiconductor cooling module 101.

A second aspect of the present disclosure provides a current transmission device, including the cable 100 with cooling function according to any of the aforementioned embodiments, a charging module 200 and a battery module 300; two ends of the cable 100 with cooling function are respectively connected to the charging module 200 and the battery

**EP 4 376 028 B1**

module 300 to conduct electric energy obtained by the charging module 200 to the battery module 300.

In a further embodiment of the present disclosure, the control module 103 is connected to the charging module 200 which supplies electric energy to the control module 103.

A third aspect of the present disclosure provides an electric vehicle, including the current transmission device according to any of the aforementioned embodiments.

According to the cable with cooling function, the current transmission device and the electric vehicle provided in the present disclosure, by disposing a cooling layer structure composed of the semiconductor cooling module on a side of the conductor and powering the semiconductor cooling module by the control module, the heat generated by the conductor when high-voltage and large current is conducted therethrough can be absorbed by the semiconductor cooling module, so as to decrease the temperature rise value of the conductor. When the conductor has a fixed size, it is possible to bear larger current and meet the temperature rise requirement. The cable with cooling function provided in the present disclosure cools the conductor just using the semiconductor cooling module and the control module, and has the advantage of simple structure. The cable with cooling function provided in the present disclosure only needs to dispose the semiconductor cooling model on a side of the conductor, and has the advantage of flexible size. The cable with cooling function provided in the present disclosure controls an electrical signal supplied to the semiconductor cooling module using the control module, so that the semiconductor cooling module can cool the conductor, and has the advantages of reliable performance, no noise and no refrigerant pollution.

In order that the above and other objectives, features and advantages of the present disclosure are more obvious and easily understood, the preferred embodiments are described below in detail with reference to the drawings.

BRIEF DESCRIPTION OF THE DRAWINGS

In order to more clearly explain the technical solutions in the embodiments of the present disclosure or in the prior art, the drawings to be used in the description of the embodiments or the prior art will be briefly introduced as follows. Obviously, the drawings used in the following description only illustrate some embodiments of the present disclosure, and those of ordinary skill in the art can obtain other drawings from them without paying any creative effort.

FIG. 1 illustrates a structural diagram of a cable with cooling function according to an embodiment of the present disclosure;

FIGS. 2A and 2B illustrate a cross-sectional view of a cable with cooling function according to an embodiment of the present disclosure;

FIG. 3 illustrates another cross-sectional view of a cable with cooling function according to an embodiment of the present disclosure;

FIG. 4 illustrates a first circuit diagram of a cable with cooling function according to an embodiment of the present disclosure;

FIG. 5 illustrates a second circuit diagram of a cable with cooling function according to an embodiment of the present disclosure;

FIG. 6 illustrates a partial enlarged view of a cable with cooling function according to an embodiment of the present disclosure;

FIG. 7 illustrates a first flowchart of a process of adjusting an electrical signal of a semiconductor cooling module by a control module according to an embodiment of the present disclosure;

FIG. 8 illustrates a second flowchart of a process of adjusting an electrical signal of a semiconductor cooling module by a control module according to an embodiment of the present disclosure;

FIG. 9 illustrates a third flowchart of a process of adjusting an electrical signal of a semiconductor cooling module by a control module according to an embodiment of the present disclosure;

FIG. 10 illustrates a cross-sectional view of a current transmission device according to an embodiment of the present disclosure;

FIG. 11 illustrates a structural diagram of a semiconductor cooling module according to an embodiment of the present disclosure; and

FIG. 12 illustrates a structural diagram of a computer device according to an embodiment of the present disclosure.

Reference numerals:

100: cable with cooling function;
101: semiconductor cooling module;
102: conductor;

3

103: control module;
104: rectifier module;
105: temperature detector;
106: low-voltage harness;
107: insulating protective layer;
200: charging module;
300: battery module;
1011: alumina substrate;
1012: waterproof protective layer;
1013: semiconductor P/N layer;
1014: power interface;
1302: computer device;
1304: processor;
1306: memory;
1308: drive mechanism;
1310: input/output module;
1312: input device;
1314: output device;
1316: presentation device;
1318: graphical user interface;
1320: network interface;
1322: communication link;
1324: communication bus.

## DESCRIPTION OF THE EMBODIMENTS

The technical solutions in the embodiments of the present disclosure will be clearly and completely described below in conjunction with the drawings for the embodiments of the present disclosure. Obviously, those described are merely a part, rather than all, of the embodiments of the present disclosure.

Although the embodiments of the present disclosure provide the operation steps of the methods as described in the embodiments or flowcharts, more or fewer operation steps may be included based on conventional or non-inventive labor. The step execution order listed in the embodiments is only one of various step execution orders and does not represent a unique execution order. In case of an actual system or apparatus product, the steps may be executed orderly or in parallel according to the methods illustrated in the embodiments or the drawings.

The illustrative embodiments and the descriptions thereof herein are used to explain, rather than limiting, the present disclosure. In addition, element/members using the same or similar reference numerals in the drawings and embodiments are intend to represent the same or similar parts.

In the prior art, the cooling of large-current conductors is mainly realized by the technologies of liquid cooling and air cooling. In which, the technology of liquid cooling requires additional cooling pipelines, pumps, heat dissipation devices, etc., and has the problems of complex system structure, extremely high requirements for safety and stability, and the increase of the cost. Limited by the mounting size and space, the technology of air cooling has the problems of low cooling efficiency and additional noises which affects the NVH of the whole vehicle.

In order to solve the above technical problems, a novel cable with cooling function is provided in an embodiment of the present disclosure. The cable with cooling function according to the present disclosure has the advantages of simple structure, flexible size, reliable performance, no noise and no refrigerant pollution.

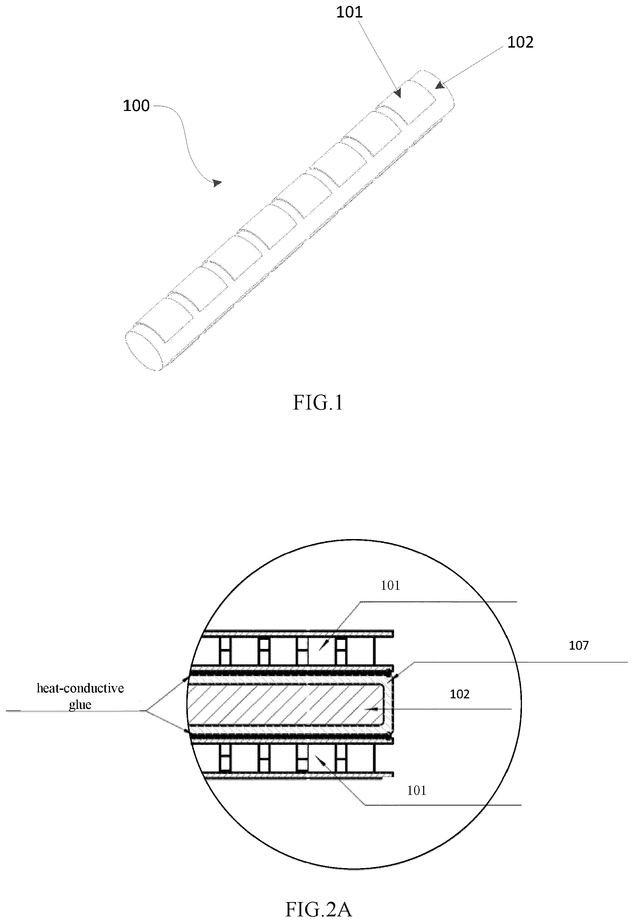

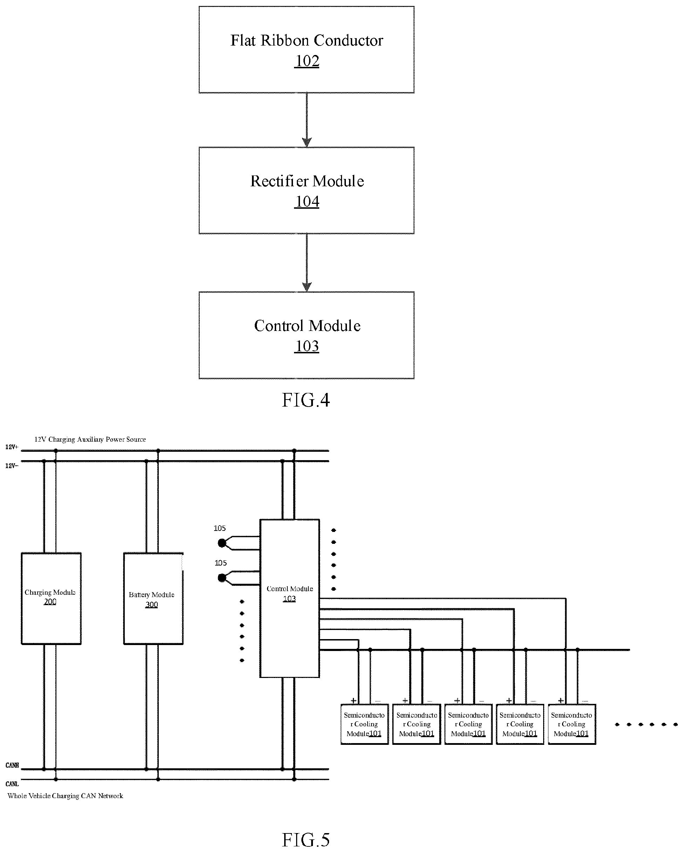

Specifically, as illustrated in FIG. 1 and FIG.5, a cable with cooling function includes a semiconductor cooling module 101, a conductor 102 and a control module 103;

a cooling end of the semiconductor cooling module 101 is disposed on at least one side of the conductor 102 to absorb heat emitted by the conductor 102;
the semiconductor cooling module 101 is electrically connected to the control module 103, and the control module 103 is configured to control an electrical signal supplied to the semiconductor cooling module 101.

In detail, the semiconductor cooling module 101 is a heat transfer tool in principle. When current flows through a thermocouple pair formed by coupling one piece of N-type semiconductor material and one piece of P-type semiconductor material, heat is transferred from one end to the other end, so that a temperature difference is generated to form a cooling end and a hot end. The semiconductor cooling module 101 according to the present disclosure includes not only the cooling end, but also the hot end opposite to the cooling end. The semiconductor cooling module 101 may be the semiconductor cooling module existing in the prior art and may be customized according to the size of the conductor. The semiconductor cooling module 101 may completely or partially cover the conductor 102.

The amount of heat released or absorbed by the semiconductor cooling module 101 is determined by the magnitude of current, so the semiconductor cooling module 101 described herein may be configured to control, through the control module 103, the electrical signals (including the current signal and the voltage signal) supplied to the semiconductor cooling module 101, thereby achieving the effect of controlling the temperature rise of the conductor 102, so that the cable with cooling function can work at a stable temperature.

Power (e.g., low-voltage 12V direct current) is supplied to the semiconductor cooling module 101 by the control module 103, and the control module 103 can realize an access control of the semiconductor cooling module 101 by controlling conduction of a connecting wire between the control module 103 and the semiconductor cooling module 101. During implementations, a control logic of the semiconductor cooling module 101 may be set by a worker according to actual needs, e.g., different semiconductor cooling modules 101 are connected in different time periods, or different electrical signals of the conductor 102 are connected to different semiconductor cooling modules 101. The logic of the control of the electrical signals supplied to the semiconductor cooling module by the control module 103 is not limited in the present disclosure, and any logic capable of realizing the control of the electrical signals belongs to the protection scope of the present disclosure. Through the power supply and control mode in the present disclosure, the structure of the cable with cooling function can be simplified, the cooling efficiency can be improved and the energy waste can be avoided.

The control module 103 may be a Central Processing Unit (CPU) or any other programmable general-purpose or special-purpose microprocessor, a Digital Signal Processor (DSP), a programmable control module, an Application Specific Integrated Circuit (ASIC) or any other similar element, or combinations thereof, and the type, model, etc. of the control module 103 are not specifically limited herein.

In some embodiments, in order to completely attach the semiconductor cooling modules 101 to the conductors 102, there may be a plurality of semiconductor cooling modules 101 of a same size or different sizes depending on the size of the conductor.

In some embodiments, the semiconductor cooling module 101 may have maximums overall dimension of more than 60 mm $\times$ 60 mm, a thickness of less than 4.1 mm, and a maximum cooling power of 270 W, with a maximum temperature difference in a single layer being more than 60°C.

Further, in order to accurately control the temperature of each of the semiconductor cooling modules 101, the plurality of semiconductor cooling modules 101 are electrically connected to the control module 103 in parallel, so that the power supply signal of each of the semiconductor cooling modules 101 can be independently controlled.

Further, when the models and powers of the plurality of semiconductor cooling modules 101 are completely consistent, the plurality of semiconductor cooling modules 101 are electrically connected to the control module 103 in series, so that the power supply signals of the plurality of semiconductor cooling modules 101 are consistent.

The plurality of semiconductor cooling modules 101 may be disposed at a regular interval (e.g., 10 cm as illustrated in FIG. 1, and the specific interval may be determined according to the temperature rise value of the semiconductor cooling modules 101) or disposed immediately (i.e., seamlessly) on a side of the conductor 102, depending on the temperature rise value of the conductor 102 in a working state.

In order to ensure the cooling effect, a ratio of a total area of the cooling end in the semiconductor cooling module 101 to an area of the conductor 102 ranges from 3% to 95%.

In order to verify the influence of the range of the ratio of the total area of the cooling end in the semiconductor cooling module 101 to the area of the conductor 102 on the temperature rise of the conductor 102, the inventor selects 13 cables with a same cross-sectional area, a same material and a same length, conducts a same current, adopts a different area ratio for the cooling end in each of the semiconductor cooling modules 101 covering the conductor 102, reads temperature rise values of the cables and records them in Table 1.

The experimental method is to conduct a same current, in a closed environment, to each cable having a different ratio of the total area of the cooling end in the semiconductor cooling module 101 to the area of the conductor 102, record a temperature before current conduction and a stable temperature after current conduction, and take an absolute value of a difference therebetween. In this embodiment, a temperature rises less than 50 K is a qualified value.

Table 1: Influence of the Ratio of the Total Area of the Cooling End in the Semiconductor Cooling Module 101 to the Area of the Conductor 102 on the Temperature Rise of the Cable

| Ratio of the total area of the cooling end in the semiconductor cooling module 101 to the area of the conductor 102 (%) | | | | | | | | | | | | | |
|------|------|------|------|------|------|------|------|------|------|------|------|------|------|
| 1 | 3 | 5 | 10 | 20 | 30 | 40 | 50 | 60 | 70 | 80 | 90 | 95 | 100 |
| Temperature rise values of the connector (K) | | | | | | | | | | | | | |
| 55.3 | 49.7 | 46.8 | 42.9 | 40.7 | 35.7 | 31.2 | 26.7 | 18.2 | 16.6 | 14.9 | 12.3 | 10.7 | 8.9 |

As can be seen from Table 1, when the ratio of the total area of the cooling end in the semiconductor cooling module 101 to the area of the conductor 102 is less than 3%, the temperature rise of the cable is less than the qualified value. As the ratio of the coverage area increases, the temperature rise decreases. However, during the use of the cable, there must be joints at both ends and a turning area in the middle, which cannot cover the semiconductor cooling module 101. Therefore, the inventor sets the ratio of the total area of the cooling end in the semiconductor cooling module 101 to the area of the conductor 102 to be 3% to 95%.

As illustrated in FIG. 2A, the semiconductor cooling module 101 is fixedly on the conductor 102 by heat-conductive glue. During implementations, the semiconductor cooling module 101 may be fixed on the conductor 102 by other means, such as screw fixation, which is not limited herein. In working conditions with high requirements on the vibration resistance, the semiconductor cooling module 101 may be fixed by an additional fixing bracket to improve the shock absorption capacity.

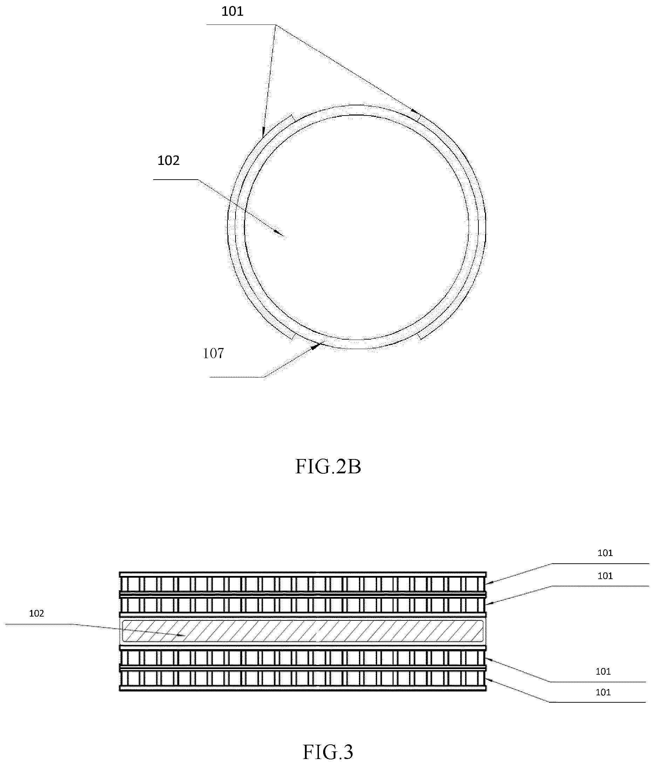

In order to improve the heat dissipation efficiency, the semiconductor cooling modules 101 are disposed on both sides of the conductor 102. In a further embodiment, according to the usage of the conductor, when the cooling demand is high, multistage refrigeration can be realized by stacking a plurality of layers of semiconductor cooling modules 101, thereby improving the cooling capacity. As illustrated in FIG. 3, double-layer semiconductor cooling modules 101 may also be disposed on either side of the conductor 102.

The heat generated by the cable 100 with cooling function in this embodiment when high-voltage and large current is conducted will be absorbed by the semiconductor cooling module 101 covering the conductor 102, so as to decrease the amount of temperature rise of the conductor, and when the conductor 102 has a fixed size, it is possible to bear larger current and meet the temperature rise requirement.

In a further embodiment of the present disclosure, as illustrated in FIG. 4, the cable with cooling function further includes a rectifier module 104, which is electrically connected between the control module 103 and the conductor 102, and configured to rectify electric energy obtained from the conductor 102 and convert the current in the conductor 102 into power supply current of the control module 103. Since the current and voltage transmitted by the conductor 102 do not necessarily meet the power supply requirement of the control module 103 and the semiconductor cooling module 101, in order to obtain electric energy from the conductor 102, it is necessary to convert the current from the conductor 102 into current and voltage that can be used by the control module 103 and the semiconductor cooling module 101, through the rectifier module.

In this embodiment, the power supply may be omitted, and the conductor 102 supplies power to the control module, which can simplify the circuit, reduce many power supply lines for the control module 103 and the semiconductor cooling module 101, and also avoid the situation that the semiconductor cooling module 101 cannot work due to the lack of power supply from an external source.

The cable with cooling function further includes at least one temperature detector disposed on the conductor and configured to detect a temperature value of the conductor; the control module is electrically connected to the temperature detector and configured to adjust the electrical signal supplied to the semiconductor cooling module 101 according to the temperature value detected by the temperature detector.

In a further embodiment of the present disclosure, as illustrated in FIGS. 1, 5 and 6, the cable with cooling function further includes a plurality of temperature detectors 105 distributed on the conductor 102 and configured to detect the temperature values of the conductor 102. During implementations, as more temperature detectors 105 are distributed and the distribution is more uniform, the detected temperature values more conform to the actual situation.

The control module 103 is electrically connected to the temperature detector 105, and configured to adjust the electrical signal supplied to the semiconductor cooling module 101 according to the temperature value detected by the temperature detector 105.

In some embodiments, the process that the control module 103 adjusts the electrical signal supplied to the semiconductor cooling module 101 according to the temperature value detected by the temperature detector 105 includes: calculating a difference between the temperature value detected by the temperature detector 105 and a preset temperature rise value of the conductor 102; inputting the difference into a PID control strategy to obtain an electrical control signal of the semiconductor cooling module 101; and adjusting the electrical signal supplied to the semiconductor cooling module 101 according to the electrical control signal of the semiconductor cooling module 101; in which control parameters in the PID control strategy are adjusted in advance according to PID control indexes.

During implementations, the preset temperature rise value may be determined according to an application scene of the conductor and a maximum temperature rise value that the conductor can bear, and is not specifically limited herein.

After being added with the temperature control function, the cable with cooling function according to the embodiment may detect the temperature and control the heat absorption amount in real time, and realize closed-loop control. The temperature rise of the conductor may be controlled differently according to the current carrying capacity of the conductor under different conditions.

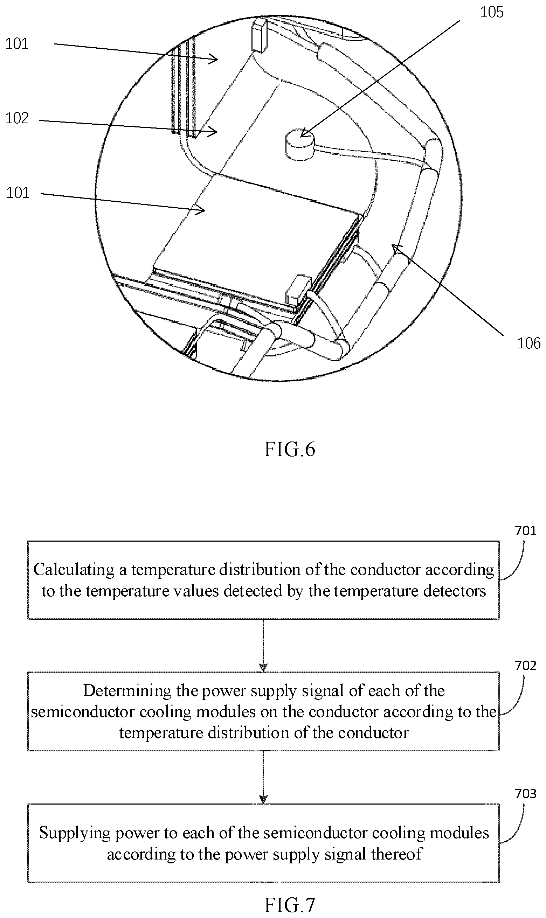

In a specific embodiment, as illustrated in FIG. 7, when there is a plurality of temperature detectors 105, the control module 103 adjusts the electrical signal supplied to the semiconductor cooling module 101 according to the temperature values detected by the temperature detectors 105, including:
Step 701: calculating a temperature distribution of the conductor 102 according to the temperature values detected by the temperature detectors 105.

During implementations, the temperature distribution of the conductor 102 may be established by a B-spline interpolation method or any other modeling method. The process of establishing the temperature distribution is not specifically limited herein.

Step 702: determining the power supply signal of each of the semiconductor cooling modules 101 on the conductor 102 according to the temperature distribution of the conductor 102.

In this step, as the temperature of the conductor 102 rises, the power supply signal of the corresponding semiconductor cooling module 101 increases. During implementations, the control module 103 may determine the power supply signal of each of the semiconductor cooling modules 101 on the conductor 102 according to a preset temperature adjustment strategy (as shown in Table 2).

Table 2: Correspondence Between the Temperature Range of the Conductor Detected by the Temperature Detector and the Power Supply Current of the Control Module

| Temperature range (°C) | Current (A) |
| --- | --- |
| X1~X2 | Y1 |
| X2~X3 | Y2 |
| ...... | ...... |

Step 703: supplying power to each of the semiconductor cooling modules 101 according to the power supply signal thereof.

In an embodiment of the present disclosure, in Step 702, determining the power supply signal of each of the semiconductor cooling modules 101 on the conductor 102 according to the temperature distribution of the conductor 102 includes:

Step 7021: calculating a difference distribution according to the temperature distribution of the conductor 102 and a preset temperature rise value of the conductor 102;
Step 7022: adjusting the electrical signal supplied to the semiconductor cooling module 101 according to the difference distribution.

During implementations, step 7022 includes inputting the difference distribution into a PID control strategy to obtain a control signal of the electrical signal of the semiconductor cooling module 101; and adjusting the electrical signal supplied to the semiconductor cooling module 101 according to the electrical control signal of the semiconductor cooling module 101; in which control parameters in the PID control strategy are adjusted in advance according to PID control indexes.

In order to more accurately adjust the electrical signal of the semiconductor cooling module 101, the control module 103 is further electrically connected to a charging module 200 to which the conductor 102 is connected, and configured to obtain a charging and discharging current value and a charging duration, and adjust the electrical signal supplied to the semiconductor cooling module 101 according to the charging and discharging current value, the charging duration and the temperature value detected by the temperature detector.

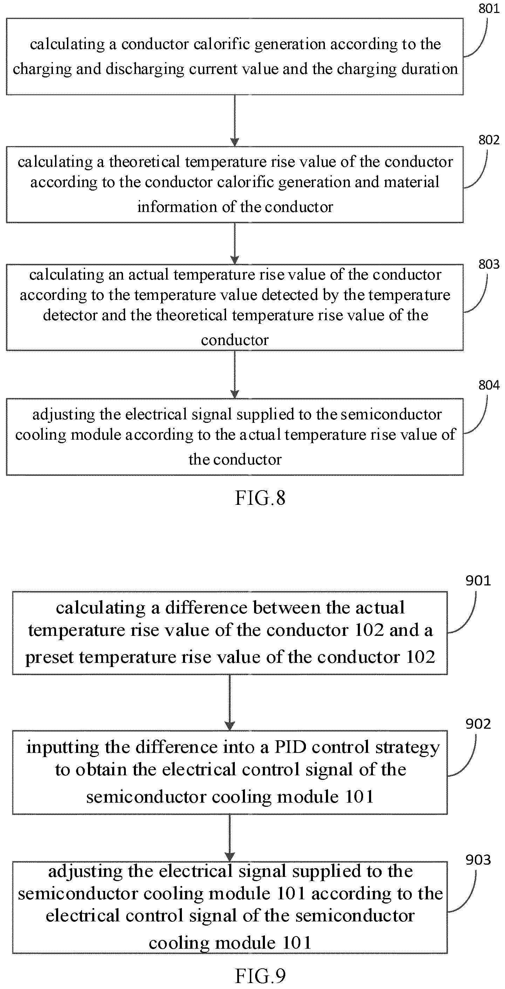

Specifically, as illustrated in FIG. 8, the control module 103 adjusts the electrical signal supplied to the semiconductor cooling module according to the charging and discharging current value, the charging duration and the temperature value detected by the temperature detector, including:
Step 801: calculating a conductor calorific generation according to the charging and discharging current value and the charging duration.

In this step, the conductor calorific generation may be calculated as $Q = I2 \times R \times t$, where Q denotes the conductor calorific generation, I denotes the charging and discharging current value, t denotes the charging duration, and R denotes a resistance of the conductor.

Step 802: calculating a theoretical temperature rise value of the conductor according to the conductor calorific generation and material information of the conductor.

The conductor calorific generation is a charging and discharging heating value. In this step, the theoretical temperature rise value of the conductor may be calculated by the following formula, which may be obtained by fitting test data obtained from a temperature rise experiment of the conductor:

$$\tau_w = \frac{Q}{t \times A \times K_T}\ ;$$

where $\tau_W$ denotes the theoretical temperature rise, $Q$ denotes the conductor calorific generation, $t$ denotes the charging duration, $A$ denotes an effective heat dissipation area, $K_T$ denotes a surface comprehensive heat dissipation coefficient of conductor, and $A$ and $K_T$ denote the material information of the conductor.

According to the heating value and the material information of the conductor, the theoretical temperature rise value of the conductor may be calculated with reference to the prior art, which is not limited herein.

Step 803: calculating an actual temperature rise value of the conductor according to the temperature value detected by the temperature detector and the theoretical temperature rise value of the conductor.

The execution process of this step includes: firstly, determining a temperature rise correction coefficient according to the temperature value detected by the temperature detector. Specifically, if the temperature value detected by the temperature detector is greater than a standard temperature value for the calculation of the temperature rise, the temperature correction coefficient is greater than 1, which increases as the temperature detected by the temperature detector rises. If the temperature value detected by the temperature detector is less than the standard temperature value for the calculation of the temperature rise, the temperature correction coefficient is less than 1, which decreases as the temperature value detected by the temperature detector drops. The actual temperature rise value of the conductor is calculated by the following formula:

$$\tau = K_w \times \tau_w;$$

where $\tau_W$ denotes the theoretical temperature rise value, $K_w$ denotes the temperature correction coefficient, and $\tau$ denotes the actual temperature rise value.

Step 804: adjusting the electrical signal supplied to the semiconductor cooling module according to the actual temperature rise value of the conductor.

According to the embodiment, it is possible to adjust the electrical signal of the semiconductor cooling module 101 according to the actual temperature rise predicted in advance in conjunction with the charging and discharging information and the temperature value detected by the temperature detector, so that the temperature of the conductor can reach the working temperature as soon as possible, thereby improving the efficiency and accuracy of the temperature control.

In a further embodiment of the present disclosure, as illustrated in FIG. 9, in order to make the current adjustment of the semiconductor cooling module 101 have an automatic adjustment capability, adjusting the electrical signal supplied to the semiconductor cooling module according to the actual temperature rise value of the conductor in Step 804 includes:

Step 901: calculating a difference between the actual temperature rise value of the conductor 102 and a preset temperature rise value of the conductor 102;

Step 902: inputting the difference into a PID control strategy to obtain the electrical control signal of the semiconductor cooling module 101.

During implementation of this step, the electrical control signal of the semiconductor cooling module 101 is generated only when there is a deviation between the actual temperature rise value of the conductor 102 and the preset temperature rise. When the actual temperature rise value of the conductor 102 is equal to the preset temperature rise, the temperature of the conductor 102 may be controlled below the preset temperature rise to ensure the safety of the conductor 102, and no electrical control signal of the semiconductor cooling module 101 will be generated at this time.

In which, control parameters in the PID control strategy are adjusted in advance according to PID control indexes. The PID control strategy includes three parts, i.e., proportional control, integral control and differential control. The PID control indexes include: rise time, overshoot, adjustment time and steady-state error. For the adjustment of the control parameters in the PID control strategy, please refer to the prior art and it will not be described in detail here.

Step 903: adjusting the electrical signal supplied to the semiconductor cooling module 101 according to the electrical control signal of the semiconductor cooling module 101.

In a further embodiment of the present disclosure, in order to improve the temperature control accuracy of the conductor and make the calculated value more conform to the actual situation, the control module 103 is further electrically connected to an environmental parameter detection module and a charging module 200 to which the conductor is connected, and configured to obtain environmental parameter information from the environmental parameter detection module and obtain a charging and discharging current value and a charging duration from the charging module; and adjust the electrical signal supplied to the semiconductor cooling module according to the environmental parameter information, the charging and discharging current value and the charging duration.

In detail, the environmental parameter information includes but is not limited to: environmental humidity, environmental temperature, environmental pressure, etc.

Adjusting the electrical signal supplied to the semiconductor cooling module 101 according to the environmental parameter information, the charging and discharging current value and the charging duration includes:

(1) Calculating a conductor calorific generation according to the charging and discharging current value and the charging duration.

(2) Calculating a theoretical temperature rise value of the conductor 102 according to the conductor calorific generation and material information of the conductor.

(3) Calculating an actual temperature rise value of the conductor 102 according to the environmental parameter information and the theoretical temperature rise value of the conductor 102.

The execution process of this step includes: firstly, determining a temperature rise correction coefficient according to the environmental parameter information; specifically, calculating a correction coefficient for each environmental parameter information (please refer to the temperature correction coefficient described in the above embodiment for the calculation process of each correction coefficient, which will not be described in detail here), and weighted-summing (as shown in Formula 1 below) or multiplying (as shown in Formula 2 below) the correction coefficients corresponding to all the environmental parameter information to obtain a final correction coefficient; and multiplying the final correction coefficient by the theoretical temperature rise value of the conductor 102 to calculate the actual temperature rise value of the conductor 102.

$$K = a_1 \times K_{w1} + \ldots\ldots + a_n \times K_{wn} \qquad \text{(Formula 1)};$$

$$K = a_1 \times K_{w1} \times \ldots\ldots \times K_{wn} \qquad \text{(Formula 2)};$$

where $K$ denotes the final correction coefficient; $a_1 \ldots a_n$ denote known quantities and may be determined according to the importance of the environmental parameters; $a$ denotes a known quantity; i denotes an i-th environmental parameter; and $K_{w1} \ldots K_{wn}$ denote environmental parameter values.

(4) Adjusting the electrical signal supplied to the semiconductor cooling module 101 according to the actual temperature rise value of the conductor 102.

In a further embodiment of the present disclosure, as illustrated in FIG. 1, FIG. 6 and FIG 10, wires connecting the semiconductor cooling module 101 to the control module 103 are disposed in a low-voltage harness 106.

In this embodiment, the wires connecting the semiconductor cooling module 101 to the control module 103 are disposed in the low-voltage harness 106, so that the lines are clear, the semiconductor cooling module can be easily adjusted and replaced, and the high-voltage and low-voltage power supply systems can be safely isolated.

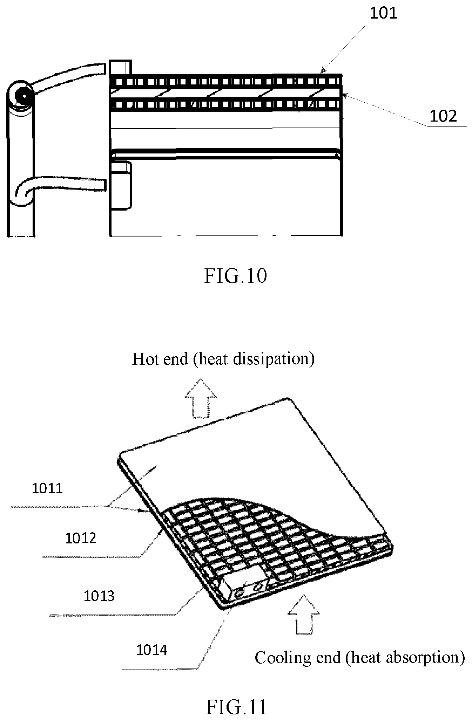

In a further embodiment of the present disclosure, as illustrated in FIG. 11, the semiconductor cooling module 101 includes an alumina substrate 1011, a waterproof protective layer 1012, a semiconductor P/N layer 1013, and a power interface 1014.

The alumina substrate 1011, the waterproof protective layer 1012, and the semiconductor P/N layer 1013 are disposed in sequence. The power interface 1014 is electrically connected to the semiconductor P/N layer 1013.

The alumina substrate 1011 constitutes a hot end of the semiconductor cooling module 101, i.e., a heat dissipation end. The semiconductor P/N layer 1013 constitutes a cooling end of the semiconductor cooling module 101, i.e., a heat absorption end.

In this embodiment, by taking the alumina substrate 1011 as the surface of the semiconductor cooling module, the thermal conductivity is improved, the heat transfer speed is increased, the cooling time is shortened, and the bearable strength is increased. Thus, the alumina substrate 1011 can be flexibly connected and better attached to the conductor, so as to effectively absorb a surface stress at a bent part of the conductor, and it will not be easily broken during mounting and use. The core of the semiconductor cooling module adopts a P-N junction made of special semiconductor materials. When current flows through a thermocouple pair formed by coupling one piece of N-type semiconductor material and one piece of P-type semiconductor material, heat is transferred from one end to the other end, so that a temperature difference is generated to form a cooling end and a hot end, i.e., a refrigeration control can be realized by controlling the DC current.

The semiconductor cooling module 101 has a cooling rate of 0.05 K/s to 5K/s.

In order to verify the influence of the cooling rate of the semiconductor cooling module 101 on the temperature rise value of the conductor 102, the inventor selects 10 cables with a same cross-sectional area, a same material and a same length, conducts a same current, adopts the semiconductor cooling modules 101 with different cooling rates to cool the cables, reads the temperature rises of the cables and records them in Table 3.

The experimental method is to conduct a same current, in a closed environment, to each cable having the semiconductor cooling modules 101 with a different cooling rate, record a temperature before current conduction and a stable temperature after current conduction, and take an absolute value of a difference therebetween. In this embodiment, a temperature rise value less than 50 K is a qualified value.

Table 3: Influence of the Cooling Rate of the Semiconductor Cooling Module 101 on the Temperature Rise of the Cable

| Cooling Rate of the Semiconductor Cooling Module 101 (K/s) | | | | | | | | | | | | |
|------|------|------|------|------|------|------|------|------|------|------|------|------|
| 0.01 | 0.03 | 0.05 | 0.1 | 0.3 | 0.5 | 1 | 2 | 3 | 4 | 5 | 6 | 7 |
| Temperature Rise Value of the Connector (K) | | | | | | | | | | | | |
| 63.8 | 52.5 | 49.6 | 47.7 | 45.2 | 43.5 | 41.4 | 37.1 | 33.2 | 30.9 | 27.5 | 26.8 | 26.5 |

As can be seen from Table 3, when the cooling rate of the semiconductor cooling module 101 is less than 0.05 K/s, the temperature rise value of the cable is less than the qualified value, and the temperature rise is decreased as the cooling rate of the semiconductor cooling module 101 increases. However, when the cooling rate of the semiconductor cooling module 101 is greater than 5K/s, the temperature rise value is not obviously decreased under the influences of the heating value of the cable itself and the power of the semiconductor cooling module 101 itself, but the power of the semiconductor cooling module 101 increases, which is not economical. Therefore, the inventor sets the cooling rate of the semiconductor cooling module 101 to be 0.05 K/s to 5 K/s.

In a further embodiment of the present disclosure, in order to ensure the safety of the conductor, an insulating protective layer 107 is disposed around the conductor 102, as illustrated in FIGS. 2A and 2B, and the insulating protective layer 107 is disposed between the conductor 102 and the semiconductor cooling module 101 or on an outer side of the semiconductor cooling module 101.

In a further embodiment of the present disclosure, the insulating protective layer 107 is made of one or combinations of polyvinyl chloride, polyurethane, nylon, polypropylene, silicone rubber, crosslinked polyolefin, synthetic rubber, polyurethane elastomer, crosslinked polyethylene and polyethylene.

Further, in order to prevent the conductor from being burnt due to fire, a fire-resistant layer is disposed outside the insulating protective layer.

In a further embodiment of the present disclosure, a cross section of the conductor 102 is circular or elliptical or rectangular or polygonal or E-shaped or F-shaped or H-shaped or K-shaped or L-shaped or T-shaped or U-shaped or V-shaped or W-shaped or X-shaped or Y-shaped or Z-shaped or arc-shaped or wave-shaped, in which an arc includes a semi-arc, an acute-angle arc, an obtuse-angle, etc. The cross section of the conductor 102 is designed into various shapes, which is convenient for a designer to select different shapes for the cross section of the conductor 102 according to the actual layout environment, reduce the volume of the cable, optimize the cable assembly environment and improve the safety of the cable.

In a further embodiment of the present disclosure, the conductor 102 described herein may be made of one or combinations of metal, conductive ceramic, carbon-containing conductor, solid electrolyte, mixed conductor and conductive polymeric material.

During implementations, the conductor 102 described herein is made of copper or copper alloy, or aluminum or aluminum alloy. Because of high voltage and large current, the cables of the electric vehicle need to use wires with a large diameter for current conduction. The conductor material made of copper has good conductivity and ductility, and is the preferred conductor material for the cables. However, with the increasing price of copper, the material cost of the conductor made of copper is higher and higher. To this end, people begin to look for alternatives to copper to reduce costs. The content of metallic aluminum in the earth's crust is about 7.73%, and after the optimization of the refining technology, the price thereof is relatively low. In addition, compared with copper, aluminum is lighter, and its conductivity is second only to copper, so that aluminum can partially replace copper in the field of electrical connections. Therefore, it is a development trend to replace copper with aluminum in the field of automotive electrical connections.

In a further embodiment of the present disclosure, in order to further improve the heat dissipation effect, the cable with cooling function further includes a heat dissipation device disposed on an outer side of the semiconductor cooling module 101. During implementations, the heat dissipation device may be close to or tightly attached to the outer side of the semiconductor cooling module 101, depending on the type of the heat dissipation device.

The heat dissipation device described herein includes but is not limited to a fan, a heat exchanger, a liquid cooling device and heat dissipation fins, in which the heat dissipation fins are preferably made of metal. In which, the large device such as the fan, the heat exchanger, or the liquid cooling device is disposed close to the semiconductor cooling module 101, and the cooling fins are tightly attached to the semiconductor cooling module 101. In a further embodiment of the present disclosure, as illustrated in FIG. 5, a current transmission device is further provided, including the cable 100 with cooling function according to any of the aforementioned embodiments, a charging module 200 and a battery module 300.

Two ends of the cable 100 with cooling function are respectively connected to the charging module 200 and the battery module 300, to conduct electric energy obtained by the charging module 200 to the battery module 300.

In some embodiments, the charging module 200 described herein is a fast charging stand, and the battery module 300 is a Battery Management System (BMS) battery management module.

In a further embodiment of the present disclosure, the control module 103 is further connected to the charging module 200 which supplies electric energy to the control module 103.

In a further embodiment of the present disclosure, there is further provided an electric vehicle, including the current transmission device according to any of the above embodiments.

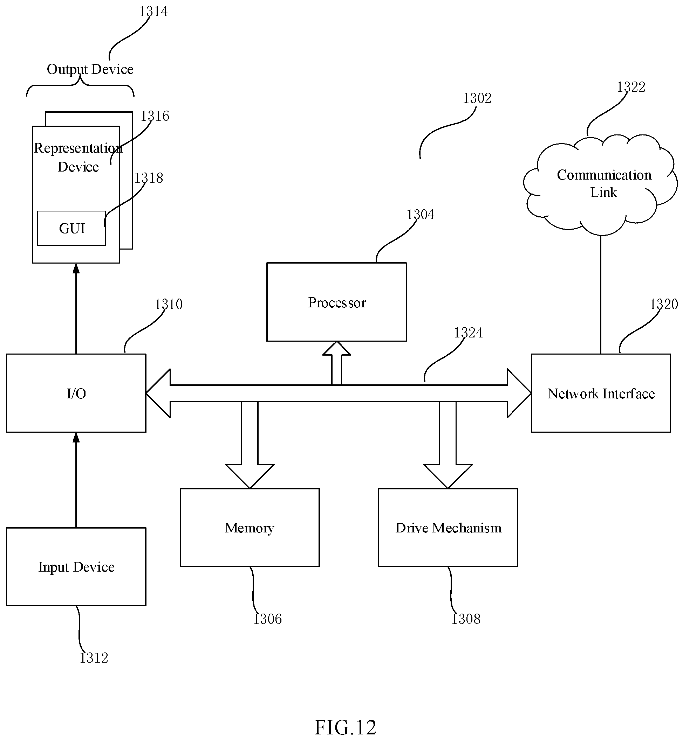

In a further embodiment of the present disclosure, the method performed by the control module may be performed in a computer device, such as a central control device, as illustrated in FIG. 12, which may include one or more processors 1304, such as one or more central processing units (CPUs) each implementing one or more hardware threads. The computer device 1302 may further include any memory 1306 configured to store any type of information such as codes, settings, data, etc. Without limitation, for example, the memory 1306 may include any or combinations of any type of RAM, any type of ROM, a flash memory device, a hard disk, an optical disk, etc. More generally, any memory may store information using any technology. Further, any memory may provide volatile or nonvolatile retention of information. Further, any memory may represent a fixed or removable component of the computer device 1302. In a case where the processor 1304 executes associated instructions stored in any memory or combination of memories, the computer device 1302 may perform any operation of the associated instructions. The computer device 1302 further includes one or more drive mechanisms 1308 interacted with any memory, such as a hard disk drive mechanism, an optical disk drive mechanism, etc.

The computer device 1302 may further include an input/output module 1310(I/O) configured to receive various inputs (via an input device 1312) and provide various outputs (via an output device 1314). A specific output mechanism may include a presentation device 1316 and an associated graphical user interface 1318 (GUI). In other embodiments, the input/output module 1310 (I/O), the input device 1312, and the output device 1314 may not be included, and the output mechanism only serves as a computer device in a network. the computer device 1302 may further include one or more network interfaces 1320 configured to exchange data with other devices via one or more communication links 1322. One or more communication buses 1324 couple the components described above together.

The communication link 1322 may be implemented in any manner, for example, through a local area network, a wide area network (e.g., the Internet), a point-to-point connection, etc., or any combination thereof. The communication link 1322 may include any combination of a hardwired link, a wireless link, a router, a gateway function, a name server, etc. governed by any protocol or combination of protocols.

In correspondence to the method in FIGS. 7 to 9, the embodiments of the present disclosure further provide a computer-readable storage medium which stores a computer program, in which when executed by a processor, the computer program perform the steps of the aforementioned method.

The embodiments of the present disclosure further provide a computer-readable instruction, in which when the instruction is executed by a processor, a program therein enables the processor to perform the method as illustrated in FIGS. 7 to 9.

It should be understood that in various embodiments of the present disclosure, the serial number of each process does not indicate an execution order that should be determined according to the function and the internal logic thereof, and the serial number of each process also does not restrict the implementation process of the embodiments herein.

It should also be understood that in the embodiments of the present disclosure, the term 'and/or' is merely an association relationship describing the associated objects, and indicates that there may be three relationships. For example, A and/or B may indicate that A exists alone, A and B exist simultaneously, and B exists alone. In addition, the character '/' herein generally indicates that the associated objects are in an 'or' relationship.

Those skilled in the art can appreciate that the units and algorithm steps of the examples described in conjunction with the embodiments disclosed herein can be implemented by electronic hardware, computer software or a combination thereof, and in order to clearly illustrate the interchangeability between hardware and software, the compositions and steps of the examples have been generally described as above in terms of functions. Whether these functions are performed in hardware or software depends on the particular application and design constraints of the technical solution. Professionals can implement the described functions using different methods for each particular application, but such implementation should not be considered as going beyond the scope of the present disclosure.

It can be clearly understood by those skilled in the art that for the convenience and conciseness of the description, the specific working processes of the systems, apparatuses and units described above can refer to the corresponding processes in the foregoing method embodiments, and will not be repeated here. In addition, the mutual coupling or direct coupling or communication connection illustrated or discussed may be an indirect coupling or communication connection through some interfaces, means or units, and may be in electrical, mechanical or other forms.

The units described as separate components may or may not be physically separated, and the components displayed as units may or may not be physical units, i.e., they may be located in one place or distributed to a plurality of network units. Some or all of the units can be selected according to the actual needs to achieve the objectives of the embodiments of the present disclosure.

In addition, the functional units in the embodiments of the present disclosure may be integrated into one processing unit, or each unit may be existed physically alone, or two or more units may be integrated into one unit. The integrated unit may be implemented in the form of hardware or a software functional unit.

If being implemented in the form of a software functional unit and sold or used as an independent product, the integrated unit may be stored in a computer readable storage medium. Based on such understanding, the essence of the technical solutions of the present disclosure, i.e., portions making contributions to the prior art, or all or part of the technical solutions may be embodied in the form of a computer software product, which is stored in a storage medium and includes several instructions for causing a computer device (e.g., a personal computer, a server, a network device, etc.) to perform all or part of the steps of the methods described in the embodiments of the present disclosure. The foregoing storage medium includes various media that can store program codes, such as a USB flash disk, a mobile hard disk, a Read-Only Memory (ROM), a Random-Access Memory (RAM), a magnetic disk, or an optical disk.

## Claims

1. A cable with cooling function, comprising a semiconductor cooling module (101), a conductor (102), a control module (103) and at least one temperature detector (105) disposed on the conductor (102) and configured to detect a temperature value of the conductor (102);

   a cooling end of the semiconductor cooling module (101) is disposed on at least one side of the conductor (102) to absorb heat dissipated from the conductor (102);

   the semiconductor cooling module (101) is electrically connected to the control module (103), and the control module (103) is configured to control an electrical signal supplied to the semiconductor cooling module (101), wherein the control module (103) is electrically connected to the temperature detector (105) and configured to adjust the electrical signal supplied to the semiconductor cooling module (101) according to the temperature value detected by the temperature detector (105);

   **characterized in that** the control module (103) is further electrically connected to a charging module (200) to which the conductor (102) is connected, and configured to:

   obtain a charging and discharging current value and a charging duration; and
   adjust the electrical signal supplied to the semiconductor cooling module (101) according to the charging and discharging current value, the charging duration and the temperature value detected by the temperature detector (105), wherein the control module (103) is specifically configured to:

   calculate a conductor calorific generation according to the charging and discharging current value and the charging duration;
   calculate a theoretical temperature rise value of the conductor (102) according to the conductor calorific generation and material information of the conductor (102);
   calculate a theoretical temperature rise value of the conductor according to the conductor calorific generation and material information of the conductor.
   calculate an actual temperature rise value of the conductor (102) according to the temperature value detected by the temperature detector (105) and the theoretical temperature rise value of the conductor (102); and
   adjust the electrical signal supplied to the semiconductor cooling module (101) according to the actual temperature rise value of the conductor (102).

2. The cable with cooling function according to claim 1, wherein there are a plurality of semiconductor cooling modules (101) which are connected to the control module (103) in parallel; or
   there are a plurality of semiconductor cooling modules (101) which are connected to the control module (103) in series.

3. The cable with cooling function according to claim 2, wherein the plurality of semiconductor cooling modules (101) are disposed on at least one side of the conductor (102) at a predetermined interval of distance.

4. The cable with cooling function according to claim 1, wherein a ratio of a total area of the cooling end in the semiconductor cooling module (101) to an area of the conductor (102) ranges from 3% to 95%; or

the cable with cooling function further comprising a rectifier module (104) electrically connected between the control module (103) and the conductor (102) and configured to rectify electric energy obtained from the conductor (102).

5. The cable with cooling function according to claim 1, wherein when there are a plurality of temperature detectors (105), adjusting the electrical signal supplied to the semiconductor cooling module (101) according to the temperature value detected by the temperature detector (105) comprises:

calculating a temperature distribution of the conductor (102) according to the temperature values detected by the temperature detectors (105);
determining a power supply signal of each of the semiconductor cooling modules (101) on the conductor (102) according to the temperature distribution of the conductor (102); and
supplying power to each of the semiconductor cooling modules (101) according to the power supply signal thereof.

6. The cable with cooling function according to claim 1, wherein adjusting the electrical signal supplied to the semiconductor cooling module (101) according to the actual temperature rise value of the conductor (102) comprises:

calculating a difference between the actual temperature rise value of the conductor (102) and a preset temperature rise value of the conductor (102);
inputting the difference into a PID control strategy to obtain an electric control signal of the semiconductor cooling module (101); and
adjusting the electrical signal supplied to the semiconductor cooling module (101) according to the electrical control signal of the semiconductor cooling module (101),
wherein control parameters in the PID control strategy are adjusted in advance according to PID control indexes.

7. The cable with cooling function according to claim 1, wherein the control module (103) is further electrically connected to an environmental parameter detection module and a charging module (200) to which the conductor (102) is connected, and configured to obtain environmental parameter information from the environmental parameter detection module and obtain a charging and discharging current value and a charging duration from the charging module (200); and adjust the electrical signal supplied to the semiconductor cooling module (101) according to the environmental parameter information, the charging and discharging current value and the charging duration.

8. The cable with cooling function according to claim 1, wherein wires connecting the semiconductor cooling module (101) to the control module (103) are disposed in a low-voltage harness (106); or

the semiconductor cooling module (101) comprises an alumina substrate (1011), a waterproof protective layer (1012), a semiconductor P/N layer (1013) and a power interface (1014);
the alumina substrate (1011), the waterproof protection layer (1012) and the semiconductor P/N layer (1013) are disposed in sequence; and
the power interface (1014) is electrically connected to the semiconductor P/N layer (1013); and
the semiconductor cooling module (101) has a cooling rate of 0.05 K/s to 5K/s.

9. The cable with cooling function according to claim 1, further comprising an insulating protective layer (107) disposed between the conductor (102) and the semiconductor cooling module (101) or disposed on an outer side of the semiconductor cooling module (101); and
the insulating protective layer (107) is made of one or combinations of polyvinyl chloride, polyurethane, nylon, polypropylene, silicone rubber, crosslinked polyolefin, synthetic rubber, polyurethane elastomer and polyethylene.

10. The cable with cooling function according to claim 1, wherein a cross section of the conductor (102) is circular or elliptical or rectangular or polygonal or E-shaped or F-shaped or H-shaped or K-shaped or L-shaped or T-shaped or U-shaped or V-shaped or W-shaped or X-shaped or Y-shaped or Z-shaped or arc-shaped or wave-shaped; or

the conductor (102) is made of one or combinations of metal, conductive ceramic, carbon-containing conductor, solid electrolyte, mixed conductor and conductive polymer material; and
the conductor (102) is made of copper or copper alloy, or aluminum or aluminum alloy; or
the cable with cooling function further comprising a heat dissipation device disposed on an outer side of the semiconductor cooling module (101).

11. A current transmission device, comprising the cable (100) with cooling function according to any of claims 1 to 10, a charging module (200) and a battery module (300);

> two ends of the cable (100) with cooling function are respectively connected to the charging module (200) and the battery module (300) to conduct electric energy obtained by the charging module (200) to the battery module (300); and
> the control module (103) is connected to the charging module (200) which supplies electric energy to the control module (103).

12. An electric vehicle, comprising the current transmission device according to claim 11.


**Patentansprüche**

1. Kabel mit einer Kühlfunktion, umfassend ein Halbleiterkühlmodul (101), einen Leiter (102), ein Steuermodul (103) und wenigstens einen Temperaturdetektor (105), welcher an dem Leiter (102) angeordnet ist und dazu eingerichtet ist, einen Temperaturwert des Leiters (102) zu detektieren;

> wobei ein Kühlende des Halbleiterkühlmoduls (101) an wenigstens einer Seite des Leiters (102) angeordnet ist, um von dem Leiter (102) abgeleitete Wärme zu absorbieren;
> wobei das Halbleiterkühlmodul (101) elektrisch mit dem Steuermodul (103) verbunden ist und das Steuermodul (103) dazu eingerichtet ist, ein dem Halbleiterkühlmodul (101) zugeführtes elektrisches Signal zu steuern,
> wobei das Steuermodul (103) elektrisch mit dem Temperaturdetektor (105) verbunden ist und dazu eingerichtet ist, das dem Halbleiterkühlmodul (101) zugeführte elektrische Signal gemäß dem durch den Temperaturdetektor (105) detektierten Temperaturwert zu steuern;
> **dadurch gekennzeichnet, dass** das Steuermodul (103) ferner elektrisch mit einem Lademodul (200) verbunden ist, mit welchem der Leiter (102) verbunden ist, und eingerichtet ist, zum:
>
>> Erhalten eines Lade- und Entladestromwerts und einer Ladedauer; und
>> Anpassen des dem Halbleiterkühlmodul (101) zugeführten elektrischen Signals gemäß dem Lade- und Entladestromwert, der Ladedauer und dem durch den Temperaturdetektor (105) detektierten Temperaturwert, wobei das Steuermodul (103) insbesondere eingerichtet ist, zum:
>>
>>> Berechnen einer Leiterwärmeerzeugung gemäß dem Lade- und Entladestromwert und der Ladedauer;
>>> Berechnen eines theoretischen Temperaturanstiegswerts des Leiters (102) gemäß der Leiterwärmeerzeugung und Materialinformationen des Leiters (102);
>>> Berechnen eines theoretischen Temperaturanstiegswerts des Leiters gemäß der Leiterwärmeerzeugung und Materialinformationen des Leiters;
>>> Berechnen eines tatsächlichen Temperaturanstiegswerts des Leiters (102) gemäß dem durch den Temperaturdetektor (105) detektierten Temperaturwert und dem theoretischen Temperaturanstiegswert des Leiters (102); und
>>> Anpassen des dem Halbleiterkühlmodul (101) zugeführten elektrischen Signals gemäß dem tatsächlichen Temperaturanstiegswert des Leiters (102).

2. Kabel mit einer Kühlfunktion nach Anspruch 1, wobei eine Mehrzahl von Halbleiterkühlmodulen (101) vorhanden ist, welche parallel zu dem Steuermodul (103) geschaltet sind; oder eine Mehrzahl von Halbleiterkühlmodulen (101) vorhanden ist, welche in Reihe zu dem Steuermodul (103) geschaltet sind.

3. Kabel mit einer Kühlfunktion nach Anspruch 2, wobei die Mehrzahl von Halbleiterkühlmodulen (101) an wenigstens einer Seite des Leiters (102) in einem vorbestimmten Abstandsintervall angeordnet ist.

4. Kabel mit einer Kühlfunktion nach Anspruch 1, wobei ein Verhältnis einer Gesamtfläche des Kühlendes in dem Halbleiterkühlmodul (101) zu einer Fläche des Leiters (102) von 3 % bis 95 % reicht; oder das Kabel mit einer Kühlfunktion ferner ein Gleichrichtermodul (104) umfasst, welches elektrisch zwischen das Steuermodul (103) und den Leiter (102) geschaltet ist und dazu eingerichtet ist, von dem Leiter (102) erhaltene elektrische Energie gleichzurichten.

5. Kabel mit einer Kühlfunktion nach Anspruch 1, wobei, wenn eine Mehrzahl von Temperaturdetektoren (105) vorhanden ist, das Anpassen des dem Halbleiterkühlmodul (101) zugeführten elektrischen Signals gemäß dem durch den Temperaturdetektor (105) detektierten Temperaturwert umfasst:

Berechnen einer Temperaturverteilung des Leiters (102) gemäß den durch die Temperaturdetektoren (105) detektierten Temperaturwerten;
Bestimmen eines Stromversorgungssignals für jedes der Halbleiterkühlmodule (101) an dem Leiter (102) gemäß der Temperaturverteilung des Leiters (102); und
Versorgen jedes der Halbleiterkühlmodule (101) mit Strom gemäß dem Stromversorgungssignal davon.

6. Kabel mit einer Kühlfunktion nach Anspruch 1, wobei das Anpassen des dem Halbleiterkühlmodul (101) zugeführten elektrischen Signals gemäß dem tatsächlichen Temperaturanstiegswert des Leiters (102) umfasst:

Berechnen einer Differenz zwischen dem tatsächlichen Temperaturanstiegswert des Leiters (102) und einem voreingestellten Temperaturanstiegswert des Leiters (102);
Eingeben der Differenz in eine PID-Regelungsstrategie, um ein elektrisches Signal des Halbleiterkühlmoduls (101) zu erhalten; und
Anpassen des dem Halbleiterkühlmodul (101) zugeführten elektrischen Signals gemäß dem elektrischen Steuersignal des Halbleiterkühlmoduls (101),
wobei Regelparameter in der PID-Regelungsstrategie im Voraus gemäß PID-Regelungsindizes angepasst werden.

7. Kabel mit einer Kühlfunktion nach Anspruch 1, wobei das Steuermodul (103) ferner elektrisch mit einem Umgebungsparameterdetektionsmodul und einem Lademodul (200) verbunden ist, mit welchem der Leiter (102) verbunden ist, und dazu eingerichtet ist, von dem Umgebungsparameterdetektionsmodul Umgebungsparameterinformationen zu erhalten und von dem Lademodul (200) einen Lade- und Entladestromwert und eine Ladedauer zu erhalten; und das dem Halbleiterkühlmodul (101) zugeführte elektrische Signal gemäß den Umgebungsparameterinformationen, dem Lade- und Entladestromwert und der Ladedauer anzupassen.

8. Kabel mit einer Kühlfunktion nach Anspruch 1, wobei Drähte, welche das Halbleiterkühlmodul (101) mit dem Steuermodul (103) verbinden, in einem Niederspannungskabelbaum (106) angeordnet sind; oder

das Halbleiterkühlmodul (101) ein Aluminiumoxidsubstrat (1011), eine wasserdichte Schutzschicht (1012), eine Halbleiter-P/N-Schicht (1013) und eine Stromschnittstelle (1014) umfasst;
das Aluminiumoxid-Substrat (1011), die wasserdichte Schutzschicht (1012) und die Halbleiter-P/N-Schicht (1013) nacheinander angeordnet sind; und
die Stromschnittstelle (1014) elektrisch mit der Halbleiter-P/N-Schicht (1013) verbunden ist; und
das Halbleiterkühlmodul (101) eine Kühlrate von 0,05 K/s bis 5 K/s aufweist.

9. Kabel mit einer Kühlfunktion nach Anspruch 1, ferner umfassend eine isolierende Schutzschicht (107), welche zwischen dem Leiter (102) und dem Halbleiterkühlmodul (101) oder an einer Außenseite des Halbleiterkühlmoduls (101) angeordnet ist; und
die isolierende Schutzschicht (107) aus einem oder Kombinationen aus Polyvinylchlorid, Polyurethan, Nylon, Polypropylen, Silikonkautschuk, vernetztem Polyolefin, synthetischem Kautschuk, Polyurethan-Elastomer und Polyethylen hergestellt ist.

10. Kabel mit einer Kühlfunktion nach Anspruch 1, wobei ein Querschnitt des Leiters (102) kreisförmig oder elliptisch oder rechteckig oder polygonal oder E-förmig oder F-förmig oder H-förmig oder K-förmig oder L-förmig oder T-förmig oder U-förmig oder V-förmig oder W-förmig oder X-förmig oder Y-förmig oder Z-förmig oder bogenförmig oder wellenförmig ist; oder

der Leiter (102) aus einem oder Kombinationen aus Metall, einer leitfähigen Keramik, einem kohlenstoffhaltigen Leiter, einem Festelektrolyt, einem Mischleiter und einem leitfähigen Polymermaterial hergestellt ist; und
der Leiter (102) aus Kupfer oder einer Kupferlegierung oder Aluminium oder einer Aluminiumlegierung hergestellt ist; oder
wobei das Kabel mit einer Kühlfunktion ferner eine Wärmeableitungsvorrichtung umfasst, welche an einer Außenseite des Halbleiterkühlmoduls (101) angeordnet ist.

11. Stromübertragungsvorrichtung, umfassend das Kabel (100) mit einer Kühlfunktion nach einem der Ansprüche 1 bis 10, ein Lademodul (200) und ein Batteriemodul;

wobei zwei Enden des Kabels (100) mit einer Kühlfunktion mit dem Lademodul (200) bzw. dem Batteriemodul (300) verbunden sind, um durch das Lademodul (200) erhaltene elektrische Energie zu dem Batteriemodul (300) zu leiten; und
das Steuermodul (103) mit dem Lademodul (200) verbunden ist, welches das Steuermodul (103) mit elektrischer Energie versorgt.

12. Elektrofahrzeug, umfassend die Stromübertragungsvorrichtung nach Anspruch 11.


**Revendications**

1. Câble à fonction de refroidissement, comportant un module de refroidissement à semi-conducteur (101), un conducteur (102), un module de commande (103) et au moins un détecteur de température (105) disposé sur le conducteur (102) et configuré pour détecter une valeur de température du conducteur (102) ;

une extrémité de refroidissement du module de refroidissement à semi-conducteur (101) est disposée sur au moins un côté du conducteur (102) pour absorber la chaleur dissipée par le conducteur (102) ;
le module de refroidissement à semi-conducteur (101) est connecté électriquement au module de commande (103), et le module de commande (103) est configuré pour commander un signal électrique fourni au module de refroidissement à semi-conducteur (101),
dans lequel le module de commande (103) est connecté électriquement au détecteur de température (105) et configuré pour ajuster le signal électrique fourni au module de refroidissement à semi-conducteur (101) en fonction de la valeur de température détectée par le détecteur de température (105) ;
**caractérisé en ce que** le
module de commande (103) est en outre connecté électriquement à un module de charge (200) auquel le conducteur (102) est connecté, et configuré pour :

obtenir une valeur de courant de charge et de décharge et une durée de charge ; et
ajuster le signal électrique fourni au module de refroidissement à semi-conducteur (101) en fonction de la valeur de courant de charge et de décharge, de la durée de charge et de la valeur de température détectée par le détecteur de température (105), dans lequel le module de commande (103) est spécifiquement configuré pour :

calculer une génération calorifique de conducteur en fonction de la valeur de courant de charge et de décharge et de la durée de charge ;
calculer une valeur théorique d'augmentation de température du conducteur (102) en fonction de la génération calorifique de conducteur et d'informations de matériau du conducteur (102) ;
calculer une valeur théorique d'augmentation de température du conducteur en fonction de la génération calorifique de conducteur et d'informations de matériau du conducteur,
calculer une valeur réelle d'augmentation de température du conducteur (102) en fonction de la valeur de température détectée par le détecteur de température (105) et de la valeur théorique d'augmentation de température du conducteur (102) ; et
ajuster le signal électrique fourni au module de refroidissement à semi-conducteur (101) en fonction de la valeur réelle d'augmentation de température du conducteur (102) .

2. Câble à fonction de refroidissement selon la revendication 1, dans lequel il existe une pluralité de modules de refroidissement à semi-conducteur (101) qui sont connectés au module de commande (103) en parallèle ; ou
il existe une pluralité de modules de refroidissement à semi-conducteur (101) qui sont connectés en série au module de commande (103).

3. Câble à fonction de refroidissement selon la revendication 2, dans lequel la pluralité de modules de refroidissement à semi-conducteur (101) sont disposés sur au moins un côté du conducteur (102) à un intervalle de distance prédéterminé.

4. Câble à fonction de refroidissement selon la revendication 1, dans lequel un rapport d'une surface totale de l'extrémité de refroidissement dans le module de refroidissement à semi-conducteur (101) sur une surface du conducteur (102) va de 3 % à 95 % ; ou

le câble à fonction de refroidissement comportant en outre un module redresseur (104) connecté électriquement entre le module de commande (103) et le conducteur (102) et configuré pour redresser l'énergie électrique obtenue à partir du conducteur (102).

5. Câble à fonction de refroidissement selon la revendication 1, dans lequel, lorsqu'il existe une pluralité de détecteurs de température (105), l'ajustement du signal électrique fourni au module de refroidissement à semi-conducteur (101) en fonction de la valeur de température détectée par le détecteur de température (105) comporte :

le calcul d'une distribution de température du conducteur (102) en fonction des valeurs de température détectées par les détecteurs de température (105) ;
la détermination d'un signal d'alimentation électrique de chacun des modules de refroidissement à semi-conducteur (101) sur le conducteur (102) en fonction de la distribution de température du conducteur (102) ; et
l'alimentation électrique de chacun des modules de refroidissement à semi-conducteur (101) en fonction du signal d'alimentation électrique de ceux-ci.

6. Câble à fonction de refroidissement selon la revendication 1, dans lequel l'ajustement du signal électrique fourni au module de refroidissement à semi-conducteur (101) en fonction de la valeur réelle d'augmentation de température du conducteur (102) comporte :

le calcul d'une différence entre la valeur réelle d'augmentation de température du conducteur (102) et une valeur prédéfinie d'augmentation de température du conducteur (102) ;
l'entrée de la différence dans une stratégie de commande PID pour obtenir un signal de commande électrique du module de refroidissement à semi-conducteur (101) ; et
l'ajustement du signal électrique fourni au module de refroidissement à semi-conducteur (101) en fonction du signal de commande électrique du module de refroidissement à semi-conducteur (101),
dans lequel les paramètres de commande dans la stratégie de commande PID sont ajustés à l'avance en fonction d'indices de commande PID.

7. Câble à fonction de refroidissement selon la revendication 1, dans lequel le module de commande (103) est en outre connecté électriquement à un module de détection de paramètres environnementaux et à un module de charge (200) auquel le conducteur (102) est connecté, et configuré pour obtenir des informations de paramètres environnementaux à partir du module de détection de paramètres environnementaux et obtenir une valeur de courant de charge et de décharge et une durée de charge à partir du module de charge (200) ; et ajuster le signal électrique fourni au module de refroidissement à semi-conducteur (101) en fonction des informations de paramètres environnementaux, de la valeur de courant de charge et de décharge et de la durée de charge.

8. Câble à fonction de refroidissement selon la revendication 1, dans lequel des fils connectant le module de refroidissement à semi-conducteur (101) au module de commande (103) sont disposés dans un faisceau basse tension (106) ; ou

le module de refroidissement à semi-conducteur (101) comporte un substrat d'alumine (1011), une couche de protection étanche (1012), une couche P/N de semi-conducteur (1013) et une interface d'alimentation (1014) ;
le substrat d'alumine (1011), la couche de protection étanche (1012) et la couche P/N de semi-conducteur (1013) sont disposés en séquence ; et
l'interface d'alimentation (1014) est connectée électriquement à la couche P/N de semi-conducteur (1013) ; et
le module de refroidissement à semi-conducteur (101) présente une vitesse de refroidissement de 0,05 K/s à 5 K/s.

9. Câble à fonction de refroidissement selon la revendication 1, comportant en outre une couche de protection isolante (107) disposée entre le conducteur (102) et le module de refroidissement à semi-conducteur (101) ou disposée sur un côté extérieur du module de refroidissement à semi-conducteur (101) ; et

la couche de protection isolante (107) est constituée d'un ou de combinaisons des éléments suivants : polychlorure de vinyle, polyuréthane, nylon, polypropylène, caoutchouc silicone, polyoléfine réticulée, caoutchouc synthétique, élastomère polyuréthane, et polyéthylène.

**10.** Câble à fonction de refroidissement selon la revendication 1, dans lequel une section transversale du conducteur (102) est circulaire, elliptique, rectangulaire, polygonale, en forme de E, en forme de F, en forme de H, en forme de K, en forme de L, en forme de T, en forme de U, en forme de V, en forme de W, en forme de X, en forme de Y, en forme de Z, en forme d'arc ou en forme de vague ; ou

le conducteur (102) est constitué d'un ou de combinaisons des éléments suivants : métal, céramique conductrice, conducteur contenant du carbone, électrolyte solide, conducteur mixte et matériau polymère conducteur ; et le conducteur (102) est en cuivre ou alliage de cuivre, ou en aluminium ou alliage d'aluminium ; ou le câble à fonction de refroidissement comportant en outre un dispositif de dissipation thermique disposé sur un côté extérieur du module de refroidissement à semi-conducteur (101).

**11.** Dispositif de transmission de courant, comportant le câble (100) à fonction de refroidissement selon l'une quelconque des revendications 1 à 10, un module de charge (200) et un module de batterie (300) ;

deux extrémités du câble (100) à fonction de refroidissement sont respectivement connectées au module de charge (200) et au module de batterie (300) pour conduire l'énergie électrique obtenue par le module de charge (200) vers le module de batterie (300) ; et le module de commande (103) est connecté au module de charge (200) qui fournit de l'énergie électrique au module de commande (103).

**12.** Véhicule électrique, comportant le dispositif de transmission de courant selon la revendication 11.

FIG.1

FIG.2A

101

102

107

FIG.2B

101
101

102

101

101

FIG.3

```
┌─────────────────────────────────┐
│                                 │
│     Flat Ribbon Conductor       │
│             102                 │
│                                 │
└─────────────────────────────────┘
                 │
                 ▼
┌─────────────────────────────────┐
│                                 │
│      Rectifier Module           │
│             104                 │
│                                 │
└─────────────────────────────────┘
                 │
                 ▼
┌─────────────────────────────────┐
│                                 │
│      Control Module             │
│             103                 │
│                                 │
└─────────────────────────────────┘
```

FIG.4

FIG.5

FIG.6

701

Calculating a temperature distribution of the conductor according to the temperature values detected by the temperature detectors

702

Determining the power supply signal of each of the semiconductor cooling modules on the conductor according to the temperature distribution of the conductor

703

Supplying power to each of the semiconductor cooling modules according to the power supply signal thereof

FIG.7

calculating a conductor calorific generation according to the charging and discharging current value and the charging duration — 801

calculating a theoretical temperature rise value of the conductor according to the conductor calorific generation and material information of the conductor — 802

calculating an actual temperature rise value of the conductor according to the temperature value detected by the temperature detector and the theoretical temperature rise value of the conductor — 803

adjusting the electrical signal supplied to the semiconductor cooling module according to the actual temperature rise value of the conductor — 804

FIG.8

calculating a difference between the actual temperature rise value of the conductor 102 and a preset temperature rise value of the conductor 102 — 901

inputting the difference into a PID control strategy to obtain the electrical control signal of the semiconductor cooling module 101 — 902

adjusting the electrical signal supplied to the semiconductor cooling module 101 according to the electrical control signal of the semiconductor cooling module 101 — 903

FIG.9

101

102

FIG.10

Hot end (heat dissipation)

1011

1012

1013

1014

Cooling end (heat absorption)

FIG.11

1314

Output Device

1316

Representation
Device

1318

GUI

1302

1322

Communication
Link

1304

Processor

1310

1324

1320

I/O

Network Interface

Memory

Drive Mechanism

1306

1308

Input Device

1312

FIG.12

**EP 4 376 028 B1**

**REFERENCES CITED IN THE DESCRIPTION**

**Patent documents cited in the description**

- CN 202110821578
- CN 202121653535
- CN 207474759 U
- CN 212579636 U
- CN 111426891 A
- CN 207652897 U
- JP 2003032865 A
- CN 111293510 A
- DE 102018120932 A1
- US 2011171855 A1